# FASCICULE DE BREVET EUROPEEN

(11) **EP 1 302 506 B1**
(45) Date de publication et mention de la délivrance du brevet: **11.01.2006**
(21) Numéro de dépôt: 02292477.3
(22) Date de dépôt: 08.10.2002
(51) Int. Cl.: C08K 5/42, C08K 5/5317, C08K 5/521, C08L 79/02

(54) **Utilisation d'acides sulfoniques, phosphoniques et phosphoriques comme dopants de la polyaniline et de matériaux composites conducteurs à base de polyaniline**
Verwendung von Sulfon-, Phosphon- und Phosphor-Säuren als Dotierstoffe von Polyanilinen und aus Polyanilinen leitfähigen Verbundmaterialien
Use of sulphonic, phosphonic and phosphoric acids as dopants of polyaniline and of conductive composite materials based on polyaniline

(30) Priorité: 10.10.2001 FR 0113045
(43) Date de publication de la demande: 16.04.2003
(73) Titulaire: COMMISSARIAT A L'ENERGIE ATOMIQUE, 75752 Paris Cédex 15 (FR); CENTRE NATIONAL DE LA RECHERCHE SCIENTIFIQUE (CNRS), 75794 Paris Cedex 16 (FR)
(72) Inventeur: Pron, Adam, 38120 Saint Egreve (FR); Dufour, Bruno, 45430 Checy (FR); Rannou, Patrice, 38320 Eybens (FR); Travers, Jean-Pierre, 38400 Saint Martin d'Heres (FR)
(74) Mandataire: Simonnet, Christine

(56) Documents cités:
- WO-A-01/04910
- WO-A-98/05040
- US-A- 5 520 852
- US-A- 5 783 111
- US-A- 6 042 740
- DATABASE CA [en ligne] CHEMICAL ABSTRACTS SERVICE, COLUMBUS, OHIO, US; OH, EUNG JU ET AL: "Electrochemical synthesis and characterization of stretchable polypyrrole films" retrieved from STN Database accession no. 136:192215 XP008005924 & MOLECULAR CRYSTALS AND LIQUID CRYSTALS SCIENCE AND TECHNOLOGY, SECTION A: MOLECULAR CRYSTALS AND LIQUID CRYSTALS (2001), 371, 243-246,
- PATENT ABSTRACTS OF JAPAN vol. 1998, no. 06, 30 avril 1998 (1998-04-30) & JP 10 036667 A (NITTO DENKO CORP), 10 février 1998 (1998-02-10)

## Description

### DOMAINE TECHNIQUE

Cette invention a pour objet des compositions comprenant des polymères conducteurs, et plus particulièrement des compositions à base de polyaniline. Ces compositions sont destinées à entrer dans la fabrication de films conducteurs à base de polyaniline présentant, notamment, de bonnes propriétés mécaniques, et pouvant être utilisés sous la forme de films minces déposés sur un support ou sous forme de films minces autosupportés. Ces films peuvent être constitués exclusivement d'un seul polymère, à savoir la polyaniline ou de plusieurs polymères, constituant, à ce moment là, des matériaux composites conducteurs, comprenant des polymères classiques, en particulier des élastomères, qui confèrent ainsi une élasticité aux matériaux conducteurs. De tels matériaux trouvent, notamment leur application dans le domaine de l'optoélectronique, où ils entrent dans la constitution des électrodes transparentes.

### ETAT DE LA TECHNIQUE ANTERIEURE

Les polyanilines, intitulées communément PANI, ont fait l'objet de nombreuses recherches. En plus de leurs propriétés conductrices évidentes, leur synthèse, à partir du monomère aniline peu coûteux, est simple et présente d'excellents rendements. De plus, la forme conductrice de la polyaniline dénote une excellente stabilité chimique à l'air.

Toutefois, pour devenir conductrice, la polyaniline, généralement obtenue sous sa forme base non conductrice, doit subir une étape de protonation par un produit dopant, qui peut intervenir, soit avant la réalisation du film conducteur, soit après la préparation dudit film.

Cependant, le dopage, après la formation du film de polyaniline, est une étape difficile, dans la mesure où la polyaniline est un composé infusible et très peu soluble dans la majorité des solvants organiques.

De plus, une fois protonée, la forme conductrice de la polyaniline est quasiment insoluble dans les solvants apolaires ou faiblement polaires et ne peut, de ce fait, prétendre à entrer dans la constitution de matériaux composites conducteurs.

Le document (1) : Synthetic Metals, 48, 1992, pp.91-97, propose l'utilisation d'acides protoniques fonctionnalisés, qui permettent à la fois le dopage de la polyaniline et la solubilisation du complexe ainsi obtenu dans des solvants organiques. De tels agents de protonation sont, par exemple, l'acide dodécylbenzènesulfonique ou l'acide camphresulfonique, dit CSA. Toutefois, les films conducteurs obtenus par cette méthode présentent une conductivité moyenne et des propriétés mécaniques inhérentes au film de polyaniline médiocres.

Le document (2) : J.Phys, Condens.Matter 10, 1998, pp.8293-8303, décrit la préparation de polyaniline conductrice, en présence de l'acide 2-acrylamido-2-méthyl-1-propanesulfonique, dit AMPSA dans un solvant acide tel que l'acide 2,2-dichloroacétique. Toutefois, bien que la température à laquelle intervient la transition entre comportement non-métallique et comportement métallique, soit plus faible que pour le système PANI-CSA vu précédemment, la conduction électrique est moins importante que celle mesurée pour ce même système.

Les documents (3) : Polymer, 1993, Volume 34, Number 20 pp. 4235-4240, et (4) : Synthetic Metals 80, 1996, pp.191-193 présentent des procédés de préparation de polyanilines conductrices, mettant en oeuvre des agents de protonation du type diesters de l'acide phosphorique. Les agents de protonation expérimentés sont, notamment, le bis(2-méthylpropyl)hydrogènephosphate, le bis(2-éthylhexyl)hydrogènephosphate, le bis(n-octyl)hydrogènephosphate ainsi que le diphényl hydrogènephosphate. Bien que les propriétés mécaniques, dont, notamment, la plasticité, soient améliorées par rapport aux réalisations précédentes, les conductivités électriques restent relativement moyennes et s'échelonnent de 10 à 65 S/cm.

Le document (5) : FR 2796379 présente une méthode de préparation de polyaniline présentant des propriétés mécaniques améliorées. Les auteurs utilisent des dopants du type diesters de l'acide 4-sulfophtalique, en particulier le diester 2-éthylhexyl de l'acide 4-sulfophtalique, dit DEHEPSA. La polyaniline dopée, de cette façon, présente une conductivité électrique correcte mais un allongement à la rupture moyen de l'ordre de 35 %, comme on le verra plus loin.

Ansi, il existe un véritable besoin, au niveau des polyanilines conductrices, d'obtenir un composé à la fois bon conducteur électrique et présentant également des propriétés mécaniques satisfaisantes, tant au point de vue de la plasticité qu'au point de vue de la flexibilité.

Enfin, il existe un besoin d'obtenir des matériaux composites conducteurs de l'électricité, incorporant de telles polyanilines conductrices, et dont les propriétés mécaniques inhérentes au matériau composite ne sont pas détériorées par la présence du polymère conducteur.

### EXPOSÉ DE L'INVENTION

Le but de la présente invention est l'utilisation d'une nouvelle famille d'agents dopants, assurant à la fois la protonation de la polyaniline sous sa forme éméraldine base tout en améliorant ses propriétés mécaniques. Ainsi, ces nouveaux agents présentent dans leur structure une double fonctionnalité, à savoir, au moins, un groupement acide susceptible de venir protoner la polyaniline, afin de la rendre conductrice, et des groupements susceptibles d'améliorer les propriétés mécaniques du polymère conducteur.

Pour ce faire, l'invention a pour objet une composition pour la fabrication de films conducteurs de polyaniline ou de matériau composite conducteur à base de polyaniline comprenant :
- une polyaniline présente sous sa forme éméraldine base, et
- un dopant répondant à la formule générale : 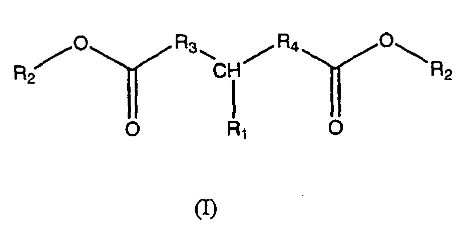
   dans laquelle :

- R₁ représente -SO₂(OH) ou -PO(OH)₂ ou -OPO(OH)₂ ;
- les R₂, identiques ou différents, représentent un groupé hydrocarboné, saturé ou insaturé à chaîne linéaire ou ramifié, comportant dans sa chaîne un ou plusieurs atomes d'oxygène, et
- R₃ et R₄ représentent indépendamment une liaison directe, un groupe hydrocarboné, saturé ou insaturé, à chaîne linéaire ou ramifié, pouvant comporter dans sa chaîne un ou plusieurs groupements aromatiques et/ou un ou plusieurs atomes d'oxygène, ou représentent un groupe hydrocarboné cyclique ou aromatique.

On précise que, dans la présente demande, le terme « polyaniline » se réfère également aux formes substituées de la polyaniline au niveau des noyaux aromatiques ou des atomes d'azote.

On précise également, que dans la présente demande, dans ce qui précède et ce qui suit, on entend par « conducteur », conducteur de l'électricité.

Au niveau de la formule (I), le groupe R₁ peut être un groupe -SO₂(OH) ou -PO(OH)₂ ou -OPO(OH)₂. Le dopant fait partie, alors, respectivement de la famille des acides sulfoniques, phosphoniques ou phosphoriques. Ce groupe assure la protonation de la forme éméraldine base de la polyaniline, afin de la rendre conductrice.

Dans cette formule, les groupes R₂, identiques ou différents, peuvent être un groupe hydrocarboné, linéaire ou ramifié, pouvant comporter des insaturations, ayant généralement de 1 à 24 atomes de carbone, de préférence, de 5 à 12 atomes de carbone. Ces groupes comportent dans leur chaîne un ou plusieurs atomes d'oxygène, par exemple 1 à 6 atomes d'oxygène, de préférence deux atomes d'oxygène.

A titre d'exemple, les groupes R₂ peuvent être un groupe alkyle, linéaire ou ramifié, comportant, dans sa chaîne de 1 à 3 atomes d'oxygène, tel que le groupe butoxyéthyl, le groupe butoxyéthoxyéthyl.

Ces groupes remplissent, selon l'invention, une double fonction :
- ils contribuent à renforcer la plasticité du matériau hôte du dopant, de part la présence du groupe hydrocarboné à chaîne longue ou moyenne, qui présente un caractère hydrophobe, et
- ils facilitent la solubilité de la polyaniline, auquel ils sont mélangés, dans un grand nombre de solvants organiques.

Les groupes R₃ et R₄ peuvent représenter des groupes hydrocarbonés, formant pont, ou une liaison directe (ou simple liaison). R₃ et R₄ forment un pont entre la fonction acide protonante et les fonctions esters à chaîne hydrocarbonée plastifiante. En particulier, R₃ et R₄ peuvent représenter un groupe alkylène de 1 à 24 atomes de carbone. De préférence, R₃ représente une liaison directe et R₄ un groupe méthylène.

Le groupe R₃ peut être une liaison directe et le groupe R₄ peut être un groupe méthylène. Dans l'alternative où R₃ représente une liaison directe et R₄ une groupe méthylène, les acides sulfoniques, phosphoniques ou phosphoriques constituent des dérivés de type diester de l'acide succinique fonctionnalisé en position α par un groupement -SO₂(OH), -PO(OH)₂ ou - OPO(OH)₂.

A titre comparatif, on citera le dopant de formule suivante:

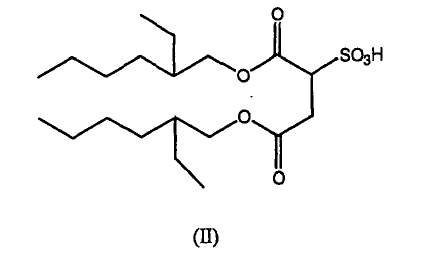

La formule (II) correspond à l'ester di-(2-éthylhexyl) de l'acide sulfosuccinique, intitulé DEHESSA.

Selon l'invention, on citera les dopants aux formules suivantes:

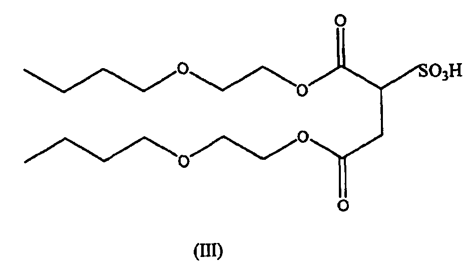

La formule (III) correspond à l'ester di(butoxyéthyl) de l'acide sulfosuccinique, intitulé DBEESSA.

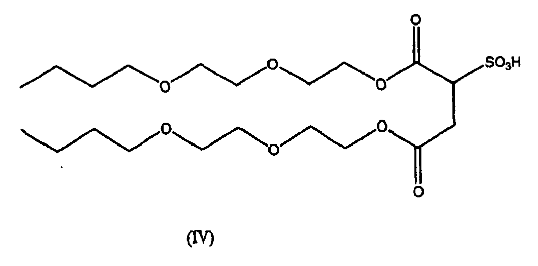

La formule (IV) correspond à l'ester di(butoxyéthoxyéthyl) de l'acide sulfosuccinique, intitulé DBEEESSA.

Au niveau de leur mode de réalisation, ces acides sulfoniques, phosphoniques ou phosphoriques peuvent être préparés, par exemple, par estérification à partir des acides succiniques fonctionnalisés et d'alcools de formule R₂OH, R₂ ayant la définition donnée ci-dessus.

Les acides succiniques fonctionnalisés en position a peuvent être soit disponibles dans le commerce, soit être synthétisés par sulfonation, phosphorylation ou phosphatation.

En ce qui concerne les autres alternatives possibles concernant les composés entrant dans la formule (I), la préparation peut être envisagée par passage du sel de l'acide de formule (I) éventuellement disponible commercialement sur une colonne échangeuse d'ions ou par estérification de l'acide sulfo-, phosphono- ou phosphorocarboxylique correspondant avec l'alcool R₂OH correspondant. Dans le cas des dérivés phosphono- et/ou phosphorocarboxyliques, il peut être nécessaire d'utiliser des groupements protecteurs des fonctions phosphoniques et des fonctions phosphoriques, le choix de ces groupements étant à la portée de l'homme du métier.

En résumé, les composés de la formule (I) sont utilisés en tant que dopants pour la polyaniline sous forme d'éméraldine base. Ces dopants remplissent une double fonction. D'une part, les groupements acides sulfoniques, phosphoniques ou phosphoriques assurent la protonation des sites basiques, en l'occurrence, ici, des sites imines, de la chaîne de polyaniline, la rendant ainsi conductrice. D'autre part, les groupes fonctionnels du type ester contribuent à plastifier le polymère, le rendant, ainsi, plus flexible et plus résistant à diverses contraintes mécaniques. A-partir de cette composition, on obtient, ainsi, des produits conducteurs présentant des conductivités supérieures à 100 S/cm et des allongements à la rupture généralement supérieurs à 100 %. De plus, lorsque les fonctions esters possèdent des substituants du type alkyle, cela contribue également à engendrer, de manière surprenante, un degré important d'organisation structurale du polymère dopé.

La polyaniline, mise en oeuvre, dans le cadre de cette invention, se présente sous forme d'éméraldine base. En effet, la forme protonée de l'éméraldine se révèle être plus conductrice que les deux autre états d'oxydation connus de la polyaniline, à savoir la leucoéméraldine et la pernigraniline.

L'éméraldine base peut être préparée par polymérisation oxydative chimique, ou par polymérisation oxydative enzymatique, ou encore par d'autres procédés tels que l'électropolymérisation.

La forme éméraldine base de la polyaniline répond à la formule (V) suivante :

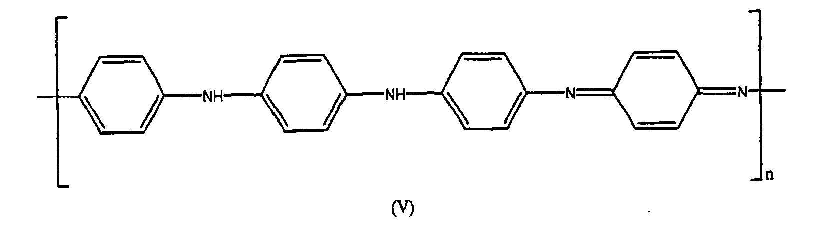

Dans cette formule (V), l'indice n correspond au nombre d'unités de répétition dans la chaîne polymère. Cet indice peut, selon l'invention, être supérieur à 10, et de préférence, supérieur à 500. On note que, pour la polyaniline, l'unité de répétition est constituée d'un enchaînement de 4 monomères aniline.

Dans les compositions, selon l'invention, le rapport molaire du dopant à la polyaniline va, de préférence, de 0,4 à 0,6. Ce rapport est calculé, en supposant que la masse molaire de la polyaniline, ramenée à une unité monomère consistant en un noyau aromatique et un atome d'azote, est de 90,5 g/mol.

Une modification de la composition, décrite ci-dessus, peut consister à ajouter à la composition, comprenant déjà la polyaniline sous forme d'éméraldine base et le dopant, un plastifiant, dit « plastifiant externe », dénommé, ainsi, en opposition au dopant, qui remplit le rôle de plastifiant interne. Le plastifiant externe ne comporte pas de propriétés acides, et est donc, de ce fait, incapable de protoner la polyaniline base. La teneur de ce plastifiant par rapport à la polyaniline est, de préférence, de 10 à 40 % en poids. La présence de ce plastifiant contribue, à améliorer encore davantage les propriétés mécaniques du produit qui résultera de la composition.

Parmi les plastifiants utilisables, dans le cadre de l'invention, le plastifiant peut être choisi parmi les diesters de l'acide phtalique tels que, par exemple, le di(2-éthylhexyl) phtalate (VI), intitulé DOP, les esters de l'acide phosphorique, tels que le triphénylphosphate (VII) intitulé TPP et le tritolylphosphate (VIII) intitulé TTP. Cette liste n'est bien sûr pas exhaustive et peut être étendue à toute famille de composés pouvant remplir le rôle de plastifiant.

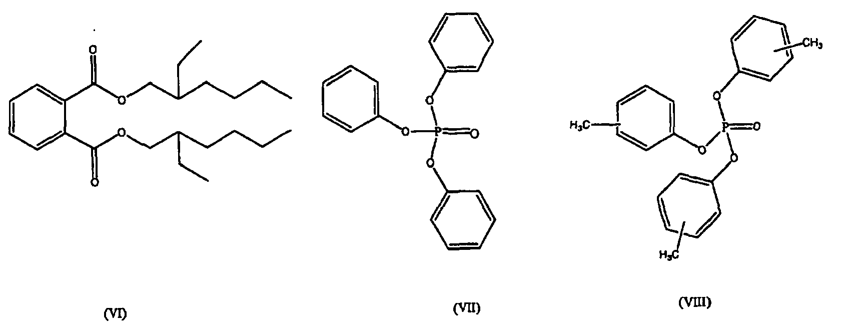

Selon l'invention, la composition décrite précédemment peut comporter, en outre, un solvant. On précise que, selon l'invention, le terme « solvant » se réfère aussi bien à un solvant unique qu'à un mélange de solvants.

On utilise, de préférence, comme solvants, des dérivés halogénés d'acides carboxyliques correspondant à la formule (IX) générale : 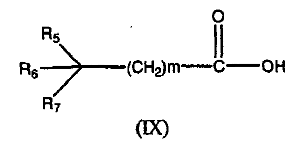
dans laquelle les groupes R₅, R₆ et R₇ représentent chacun le même atome ou, au moins, deux atomes différents choisis parmi le groupe d'atomes H, F, Cl, Br et CN ; l'indice m est égal à 0 ou est un nombre entier inférieur à 12, de préférence inférieur à 4. Le pKa de ce solvant ne doit pas, de préférence, dépasser 5 et de préférence, le solvant doit avoir un pKa dépassant de 0,5, au moins, celui des acides sulfoniques, phosphoniques ou phosphoriques de formule (I).

A titre d'exemples, le solvant répondant à la formule (IX) utilisables selon l'invention est choisi parmi l'acide 2,2-dichloroacétique, l'acide 2,2-difluoroacétique, l'acide perfluoroacétique, l'acide chlorodifluoroacétique, l'acide bromoacétique, l'acide chloroacétique ou un mélange de ceux-ci. De préférence, le solvant utilisé est l'acide 2,2-dichloroacétique.

D'autres exemples de solvants, ne rentrant pas dans le cadre de la formule (IX), sont également utilisables, dans le cadre de cette invention, tels que, par exemple, l'acide 2-chloropropionique, l'acide 2,2-dichloropropionique, l'acide 2,2-bis(trifluorométhyl)-2-hydroxyacétique, l'acide cyanoacétique, l'acide pyruvique, l'acide 2-oxobutyrique, l'acide 2-chlorobutyrique, l'acide 2-oxo-3-méthylbutanoïque, l'acide formique, l'acide acrylique ou encore l'acide acétique ou un mélange de ceux-ci.

Selon l'invention, la teneur en polyaniline est de 0,1 à 10 % en poids.

L'invention a également pour objet un procédé de fabrication d'un film conducteur de polyaniline.

Pour préparer un film conducteur de polyaniline, présentant des propriétés intéressantes, à partir des compositions citées ci-dessus, deux alternatives sont possibles, selon l'invention.

Selon une première alternative, on part d'une composition, dénuée de solvant, comprenant la polyaniline sous forme éméraldine base, un dopant tel que défini précédemment et éventuellement un plastifiant, conforme à l'invention et on forme, à partir de ladite composition le film par traitement thermique. A l'issue de ce traitement thermique, on obtient un film conducteur de polyaniline. Les processus thermiques, pour mettre en forme le film conducteur de polyaniline, selon l'invention, sont des procédés classiques bien connus de l'homme du métier, tels que l'injection, l'extrusion, le pressage à chaud, le calandrage, le thermoformage.

Selon une seconde alternative, on part d'une composition comprenant la polyaniline sous forme éméraldine base, un dopant tel que défini précédemment, et éventuellement un plastifiant conforme à l'invention et un solvant. Cette solution est coulée sur un support, par exemple, en verre, en alumine ou encore en polyéthylène, puis le film est formé par évaporation du solvant. A l'issue de ce procédé, on obtient un film conducteur déposé sur le support. Le film obtenu peut être facilement désolidarisé du support, pour donner un film conducteur de polyaniline auto-supporté.

L'invention a également pour objet une polyaniline sous sa forme dopée par un composé tel que défini précédemment. Les dopants utilisés sont choisis, par exemple, parmi les acides tels que éméraldine base, le DBEESSA de formule (III), le DBEEESSA de formule (IV). La polyaniline conductrice peut comporter, en outre, un plastifiant. Ce plastifiant est, par exemple, le triphénylphosphate.

L'invention a également pour objet un procédé de fabrication d'un matériau composite conducteur, comportant une polyaniline conductrice sous sa forme éméraldine base et un polymère isolant.

Selon l'invention, on précise, que le terme « polymère isolant » se réfère aussi bien à un polymère isolant unique qu'à des mélanges de polymères isolants.

Comme dans le cas de la fabrication de films conducteurs de polyaniline, deux alternatives, selon l'invention sont envisageables.

Selon une première alternative, le procédé consiste, dans un premier temps, à mélanger une composition, selon l'invention comportant une polyaniline sous forme éméraldine base, un dopant et éventuellement un plastifiant, avec un polymère isolant. Dans un deuxième temps, on forme, à partir du mélange obtenu, le matériau composite conducteur par traitement thermique du mélange précédemment obtenu. Ce traitement peut être suivi, par exemple, par une phase d'extrusion. Cette alternative du procédé présente l'avantage de ne pas nécessiter l'utilisation de solvant, ce qui évite le piègeage d'une partie de celui-ci dans la matrice de polymère obtenue.

Selon une seconde alternative du procédé, on mélange, dans un premier temps une première solution formée d'une composition, selon l'invention, comprenant une polyaniline, un dopant, un solvant tel que défini précédemment et éventuellement un plastifiant, avec une deuxième solution d'un polymère isolant dans un solvant. Dans un deuxième temps, on forme le matériau composite conducteur par évaporation des solvants, à partir du mélange obtenu. De préférence, le solvant de la première solution et le solvant de la deuxième solution sont identiques.

Le polymère isolant, selon l'invention, peut être choisi, par exemple, parmi les polymères vinyliques tels que le polychlorure de vinyle, les polymères cellulosiques tels que l'acétate de cellulose, les polymères acryliques tels que le polyméthacrylate de méthyle, les polymères du type polyesters tels que le le polyéthylène téréphtalate, les polymères du type polyamides tels que le polyamide-6,6 et des mélanges de ceux-ci.

Le fait d'adjoindre à une matrice constituée de polymère isolant un polymère conducteur de polyaniline, contenant éventuellement un plastifiant, ne nuit en rien aux propriétés mécaniques du polymère isolant, dans la mesure où le dopant ajouté à la polyaniline contribue, en plus de la conductivité électrique, à améliorer, de façon concomittante les propriétés mécaniques de ladite polyaniline.

L'invention a également pour objet un matériau composite conducteur comprenant une matrice de polymère isolant au sein de laquelle est dispersée une polyaniline conductrice sous sa forme éméraldine base dopée par un dopant tel que défini précédemment. Le dopant peut être choisi, par exemple, parmi le DBEESSA de formule (III), le DBEEESSA de formule (IV). Ce 0 matériau peut comporter, en outre, un plastifiant. Ce plastifiant est, par exemple, le triphénylphosphate. Le polymère isolant, entrant dans la constitution du matériau composite conducteur, est, par exemple, le polyméthacrylate de méthyle. Généralement, la teneur en polyaniline du matériau composite est de 0.01 à 40 % en poids.

D'autres caractéristiques et avantages de l'invention ressortiront mieux à la lecture des exemples ci-dessous donnés à titre illustratif et non limitatif, en référence aux dessins annexés.

### BRÈVE DESCRIPTION DES DESSINS

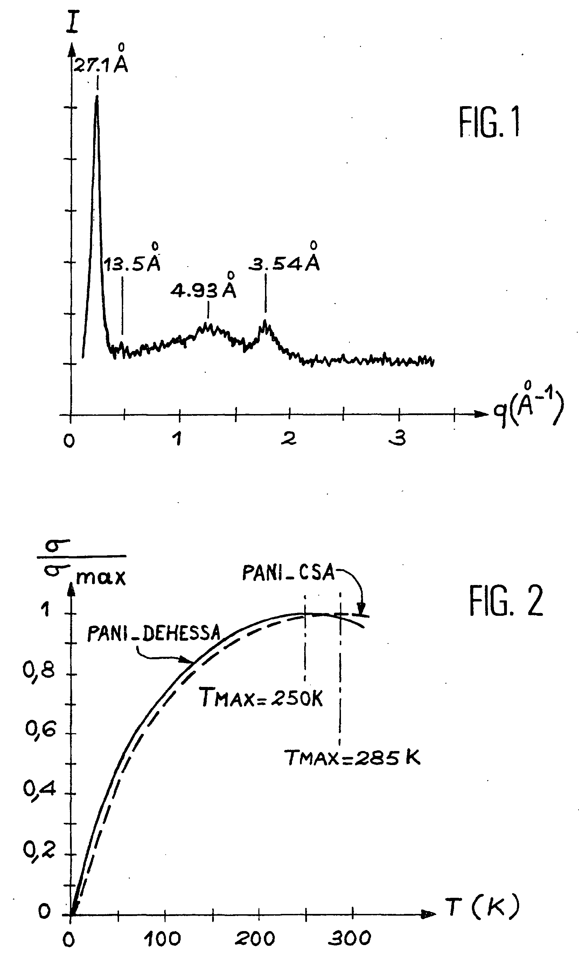

La figure 1 représente le diffractogramme de la polyaniline dopée par un dopant ce dopant étant le DEHESSA de formule (II).

La figure 2 illustre les variations de conductivités électriques (σ/σₘₐₓ) (en S/cm) d'un film de polyaniline dopée PANI/DEHESSA et d'un film de polyaniline dopée selon l'art antérieur PANI/CSA en fonction de la température (en K). La conductivité est exprimée sous la forme de conductivité réduite, c'est-à-dire le rapport (σ/σₘₐₓ) de la conductivité mesurée σ sur la conductivité maximale σₘₐₓ.

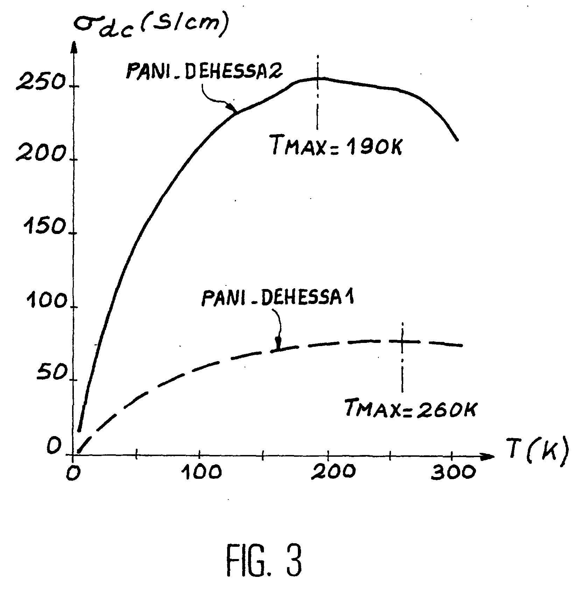

La figure 3 illustre les variations de conductivités électriques σ_{dc} (en S/cm) en fonction de la température (en K) d'un film de polyaniline dopée PANI/DEHESSA non étiré (PANI-DEHESSA 1) et d'un même film étiré (PANI-DEHESSA 2), à une vitesse de 1mm/min à température ambiante, jusqu'à un allongement de 77%.

### EXPOSÉ DÉTAILLÉ DE MODES DE RÉALISATION PARTICULIERS

Les exemples suivants illustrent, notamment, l'emploi de dopants conformes à l'invention tels que le DBEESSA de formule (III), le DBEEESSA de formule (IV), entrant dans la constitution de films conducteurs de polyaniline et de matériaux composites conducteurs. Des essais comparatifs sont effectués avec des dopants de l'art antérieur tels que l'ester di(2-éthylhexyl) de l'acide 4-sulfophtalique dit DEHEPSA, l'acide camphresulfonique dit CSA, l'acide 2-acrylamido-2-méthyl-1-propanesulfonique, dit AMPSA ainsi que le DEHESSA de formule (II).

### Exemple 1

Dans cet exemple, on prépare un film conducteur de polyaniline dopée avec DBEEESSA de formule (IV), contribuant à rendre la polyaniline sous forme éméraldine base conductrice et à améliorer simultanément ses propriétés mécaniques, à savoir sa plasticité et sa flexibilité.

### a) Fabrication de l'éméraldine base.

Dans un premier temps, une solution d'aniline fraîchement distillée est préparée dans un mélange eau-éthanol-LiCl. La composition exacte du mélange est la suivante : 10 mL (0.1097 mole) d'aniline, 85 mL d'une solution aqueuse d'acide chlorhydrique 3M, 95 mL d'éthanol et 16 g de LiCl. Cette solution est mélangée avec une solution contenant l'agent de polymérisation oxydant, consistant en 6.25 g (0.0274 mole) de persulfate d'ammonium, 60 mL d'HCl 2M et 8 g de LiCl. Avant mélange, les deux solutions sont préalablement refroidies à -27°C. On laisse la réaction s'effectuer pendant environ 2 heures, tout en contrôlant le potentiel du mélange réactionnel, par rapport à une électrode standard au calomel. On ajoute, ensuite, une solution réductrice, composée de 3,64 g (0,0183 mole) de FeCl₂, 5 g de LiCl et 50 mL d'HCl 2M, afin de mieux contrôler l'état d'oxydation exact de la polyaniline formée. Après une heure supplémentaire, la réaction est terminée et le polymère obtenu est extrait du milieu réactionnel soit par filtration, soit par centrifugation. La poudre de polymère est ensuite lavée avec des quantités importantes d'eau distillée, jusqu'à ce que le test au nitrate d'argent, pour déterminer la présence d'ions chlorure, soit négatif. L'ensemble est ensuite séché jusqu'à l'obtention d'une masse constante. Le sel d'éméraldine obtenu sous forme de chlorhydrate, est alors transformé en éméraldine base par traitement avec 2 litres d'une solution aqueuse d'ammoniaque 0,3M pendant 48 heures. La polyaniline déprotonée est ensuite lavée avec 5 litres d'eau distillée, suivi de 2 litres de méthanol puis séchée jusqu'à l'obtention d'une masse constante.

Les fractions de faible poids moléculaire sont éliminées par lavage du polymère avec du chloroforme dans un appareil de Soxhlet. La viscosité inhérente de l'éméraldine base telle que préparée, est de 2.5 dl/g, dans une solution à 0.1 % en poids dans l'acide sulfurique à 96 %.

### b) Préparation du DBEEESSA de formule (IV).

DBEEESSA est préparé à partir de l'acide sulfosuccinique et de 2-(2-butoxyethoxy)éthanol au cours d'un réaction d'estérification. Le protocole est le suivant : on mélange 10 g d'acide sulfosuccinique, sous forme d'une solution aqueuse à 70 % en poids (50,5 mmol) avec 24,6 g de 2-(2-butoxyethoxy)éthanol (151,5 mmol). La réaction est effectuée à 110°C sous flux constant d'azote purifié. Le produit obtenu est séché jusqu'à l'obtention d'une masse constante sous vide (10⁻⁵ mbar) à 70°C. Le produit est identifié et caractérisé par RMN¹H, IR et analyse élémentaire.

### c) Préparation d'un film de polyaniline auto-supporté et étirable dopée avec DBEEESSA.

On mélange 111 mg de polyaniline base et 302 mg de DBEEESSA (rapport molaire dopant/PANI=0,5) dans 22,2 g d'acide 2,2'-dichloroacétique. On agite la solution pendant une période pouvant aller de quelques jours à quelques semaines, jusqu'à ce qu'on n'observe plus d'évolution du spectre UV-vis-NIR. Des films autosupportés peuvent être préparés, à partir de cette solution, par coulée. Environ 1 mL de cette solution est déposée sur un substrat en polypropylène. Le solvant est éliminé par évaporation à 45°C sous atmosphère d'argon. Le film ainsi obtenu est désolidarisé de son substrat et séché sous vide (10⁻⁵ mbar), jusqu'à l'obtention d'une masse constante. Les films obtenus ont une épaisseur de l'ordre de 20-30 micromètres.

Sa conductivité mesurée par une méthode à 4 contacts est de l'ordre de 90 S/cm à température ambiante. Le film, étiré manuellement à température ambiante, présente un allongement à la rupture de 195%.

### Exemple comparatif 1

Dans cet exemple comparatif, on suit le même mode opératoire que dans l'exemple 1, en utilisant le même rapport molaire dopant/polyaniline et la même concentration de polyaniline dans l'acide 2,2-dichloroacétique, mais en utilisant, cette fois-ci, comme dopant le diester 2-éthylhexyl d'acide 4-sulfophtalique, dit DEHEPSA décrit dans la référence (5). Le film conducteur obtenu présente une conductivité de 115 S/cm et un allongement à la rupture de 36 %, soit des propriétés mécaniques peu satisfaisantes.

### Exemple comparatif 2

On utilise les mêmes conditions expérimentales que dans l'exemple 1 mais le solvant utilisé est le m-crésol et le dopant est l'acide camphresulfonique, dit CSA tel que cela est décrit dans la référence (1). La conductivité électrique, à température ambiante, est de 230 S/cm et l'allongement à la rupture est de 2 %, soit des propriétés mécaniques très médiocres.

### Exemple 2.

Dans cet exemple, on compare l'étirabilité de films de polyaniline dopée conformément à l'invention à celle de films de polyaniline dopée par l'acide 2-acrylamido-2-méthyl-1-propanesulfonique intitulé AMPSA, utilisé dans la publication (2). Dans tous les cas, on utilise le mode opératoire de l'exemple 1, un rapport molaire dopant/PANI de 0,5 et une solution à 0.5 % en poids de PANI dans l'acide 2,2-dichloroacétique.

Le rapport molaire est calculé sur la base de la masse molaire de l'éméraldine base correspondant à un motif monomère de l'éméraldine qui est de 90,5 g/mol.

Des essais d'étirement sont effectués dans les mêmes conditions expérimentales, à savoir à température ambiante et à une vitesse d'étirement de 1 mm/min.

Les dopants choisis entrant dans le cadre de la formule générale (I), sont le DBEESSA de formule (III), le DBEEESSA de formule (IV).

Les résultats d'allongement à la rupture sont de 130 % pour PANI/DBEESSA, 195 % pour PANI/DBEEESSA et 115 % pour PANI/AMPSA.

L'ensemble de ces exemples montre, de façon évidente, que l'utilisation de dopants conformes à l'invention répondant à la formule générale (I) améliore, de manière significative, l'allongement à la rupture des films de polyaniline dopée, tout en maintenant leurs propriétés conductrices.

### Exemple 3.

En utilisant les mêmes conditions expérimentales que dans l'exemple 1, le même rapport molaire dopant/PANI (0,5) et le même solvant, on réalise un film de PANI auto-supporté dopée avec le DBEESSA, de formule (III).

Ce dopant est préparé par estérification de l'acide sulfosuccinique par le butoxyéthanol de la même façon que dans l'exemple 1, pour DBEEESSA. L'échantillon obtenu présente une conductivité électrique de 125 S/cm et un allongement à la rupture de 130 %.

### Exemple 4 (pas selon la demande)

En utilisant les mêmes conditions expérimentales que dans l'exemple 1, le même rapport molaire et le même solvant, on réalise un film de polyaniline auto-supporté dopée avec le DEHESSA de formule (II).

Ce dopant est préparé à partir de son sel de sodium, sous forme de sulfonate, disponible commercialement, en le passant à travers une résine échangeuse d'ions, suivi d'un séchage sous vide.

L'échantillon obtenu présente, à température ambiante, une conductivité électrique de 110 S/cm et un allongement à la rupture de 95 %.

Sur la figure 1, on a représenté le diffractogramme de la polyaniline dopée par DEHESSA ainsi obtenu, qui représente l'intensité I des pics de diffraction en fonction de l'inverse de la distance q, q étant défini par q= (2n/d), d ayant la dimension d'une distance cristallographique et étant déterminée, communément par la loi de Bragg. Sur ce graphe, on peut observer un pic d'intensité importante correspondant à une distance intercouche de 27,1 Å. Cette valeur est caractéristique d'une organisation supramoléculaire du type lamellaire. Ce haut degré d'organisation moléculaire est dû, sans équivoque, aux interactions supramoléculaires résultant des liaisons hydrogène entre les groupes carbonyle du dopant et les groupes amines du polymère.

### Exemple comparatif 3.

En utilisant les mêmes conditions expérimentales que dans l'exemple 1 et l'exemple comparatif 1, on prépare un film auto-supporté de polyaniline dopé avec l'acide camphresulfonique, dit CSA, présentant une conductivité électrique, à température ambiante, de 230 S/cm et un allongement à la rupture de 2%.

Sur la figure 2, on a représenté les variations de la conductivité réduite (σ/σₘₐₓ), en fonction de la température T (en K), du film conducteur (PANI-DEHESSA) obtenu, dans l'exemple 4 pas selon la demande, avec le dopant DEHESSA dans l'acide 2,2-dichloroacétique et du film conducteur de polyaniline selon l'art antérieur dopée avec l'acide camphresulfonique dans le m-crésol, obtenu ci-dessus, l'ensemble étant dénommé (PANI-CSA).

La conductivité électrique réduite (σ/σₘₐₓ) correspond au rapport de la conductivité mesurée σ sur la conductivité maximale σₘₐₓ. Pour les deux échantillons en question, on peut remarquer qu'ils présentent, tous deux, un comportement métallique. Pour l'essai PANI-CSA, le maximum de conductivité se situe à une température de 285 K alors que, pour l'essai PANI-DEHESSA, le maximum de conductivité se situe à une température de 250 K. Au-delà de ces températures, la conductivité électrique diminue, lorsque la température continue à augmenter, ce qui traduit un comportement métallique.

Ces exemples démontrent que l'utilisation de dopants de formule (II) améliorent non seulement les propriétés mécaniques des films de polyaniline mais également le comportement métallique, dans la mesure où la gamme de température, où se manifeste ce comportement, est plus large dans le cas de la PANI dopée avec DEHESSA que dans le cas de la PANI dopée avec CSA.

### Exemple 5 (pas selon la demande).

En utilisant les mêmes conditions expérimentales que celles de l'exemple 4 pas selon la demande, on prépare une solution destinée à la coulée d'un film de polyaniline auto-supporté. On ajoute, à cette solution, 30 % en poids par rapport au poids de PANI d'un plastifiant externe, le triphénylphosphate. L'échantillon présente, à température ambiante, une conductivité de 102 S/cm et un allongement à la rupture de 100 %.

Cet exemple montre que l'addition d'un plastifiant, dénué de propriétés dopantes, améliore l'étirabilité de la polyaniline dopée tout en préservant sa haute conductivité électrique.

### Exemple 6 (pas selon la demande).

On mélange 9 mg d'une solution de PANI dopée avec DEHESSA préparée conformément à l'exemple 1, avec 100 mg d'une solution à 10 % en poids de polyméthacrylate de méthyle, PMMA, dans l'acide 2,2-dichloroacétique, contenant en plus 30 % en poids de TPP plastifiant de formule (VII) par rapport au poids de PMMA. Après agitation pendant une période de temps importante, on obtient un matériau composite par coulée à 45°C, présentant une conductivité de 3.10⁻¹ S/cm.

### Exemple 7 (pas selon la demande).

En utilisant les mêmes conditions expérimentales que dans l'exemple 1, le même rapport molaire et le même solvant, on réalise un film non étiré de PANI auto-supporté dopée avec le DEHESSA de formule (II) (PANI-DEHESSA1).
On prépare, également, un film étiré à 77%, en étirant l'échantillon préparé précédemment à une vitesse de 1 mm/min à température ambiante (PANI-DEHESSA2).
On détermine les variations de conductivité électrique des deux films en fonction de la température. Les résultats obtenus sont représentés sur la figure 3.

Selon la figure 3, on note que l'échantillon de film non étiré PANI-DEHESSA1 présente, à température ambiante, une conductivité électrique de 75 S/cm. Pour ce même échantillon, le maximum de conductivité se situe à une température T_{MAX} de 260 K.

Sur la courbe PANI-DEHESSA2,on note, que l'échantillon de film étiré à 77% présente, à température ambiante, une conductivité électrique de 210 S/cm et un maximum de conductivité à 190 K.

Cet exemple démontre, que l'utilisation de dopants de formule (II) permet d'étirer les films de polyaniline dopée à température ambiante, d'augmenter la conductivité électrique, à température ambiante, d'un facteur au moins égal à 3 ainsi que d'augmenter la zone de comportement métallique jusqu'à des températures au moins aussi basses que 190 K.

### Références bibliographiques

[1] : Synthetic Metals, 48, 1992, pp.91-97.
[2] : J.Phys : Condens.Matter 10, 1998, pp.8293-8303.
[3] : Polymer, 1993, Volume 34, Number 20 pp. 4235-4240.
[4] : Synthetic Metals 80, 1996, pp.191-193.
[5] : FR 2796379.

## Revendications

1. Composition pour la fabrication de films conducteurs de polyaniline ou de matériau composite conducteur à base de polyaniline comprenant :
- une polyaniline présente sous sa forme éméraldine base ; et
- un dopant répondant à la formule générale : 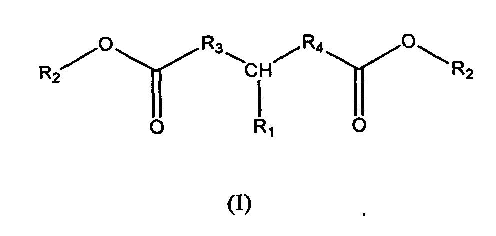
dans laquelle :
- R₁ représente -SO₂(OH) ou -PO(OH)₂ ou -OPO(OH)₂ ;
- les R₂, identiques ou différents, représentent un groupe hydrocarboné, saturé ou insaturé, à chaîne linéaire ou ramifié, comportant dans sa chaîne un ou plusieurs atomes d'oxygène ; et
- R₃ et R₄ représentent indépendamment une liaison directe, un groupe hydrocarboné, saturé ou insaturé, à chaîne linéaire ou ramifié, pouvant comporter dans sa chaîne un ou plusieurs groupements aromatiques et/ou un ou plusieurs atomes d'oxygène, ou représentent un groupe hydrocarboné cyclique ou aromatique.

2. Composition selon la revendication 1, dans laquelle le dopant répond à la formule (I), dans laquelle les R₂ représentent des groupes alkyles, linéaires ou ramifiés, comportant de 5 à 12 atomes de carbone.

3. Composition selon la revendication 1, dans laquelle le dopant répond à la formule (I), dans laquelle les R₂ représentent des groupes alkyles, linéaires ou ramifiés, comportant dans leur chaîne de 1 à 3 atomes d'oxygène.

4. Composition selon la revendication 2 ou 3, dans laquelle le dopant répond à la formule (I), dans laquelle R₃ est une liaison directe et R₄ est un groupe méthylène.

5. Composition selon la revendication 1, dans laquelle le dopant répond à la formule :

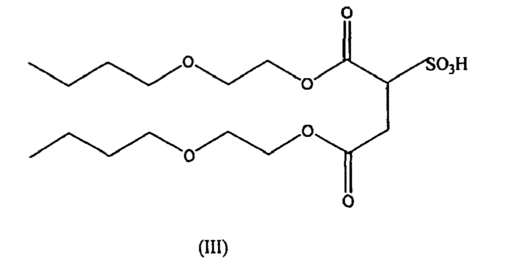

6. Composition selon la revendication 1, dans laquelle le dopant répond à la formule :

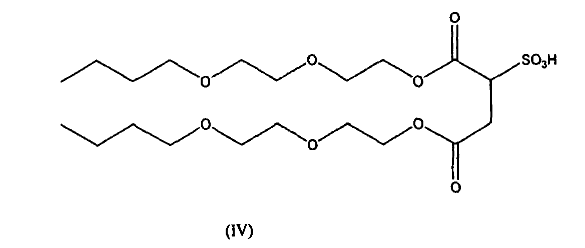

7. Composition selon l'une quelconque des revendications précédentes, dans laquelle la polyaniline comprend un nombre d'unités de répétition supérieur à 10, l'unité de répétition répondant à la formule (V) suivante :

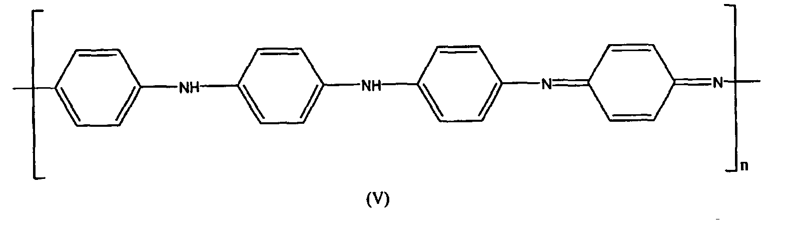

8. Composition selon l'une quelconque des revendications 1 à 7, dans laquelle le rapport molaire du dopant à la polyaniline est dans la gamme de 0,4 à 0,6.

9. Composition selon l'une quelconque des revendications 1 à 8, comprenant, en outre un plastifiant.

10. Composition selon la revendication 9, dans laquelle le plastifiant est choisi parmi les diesters de l'acide phtalique et les esters de l'acide phosphorique.

11. Composition selon la revendication 10, dans laquelle le plastifiant est choisi parmi les composés de formules suivantes :

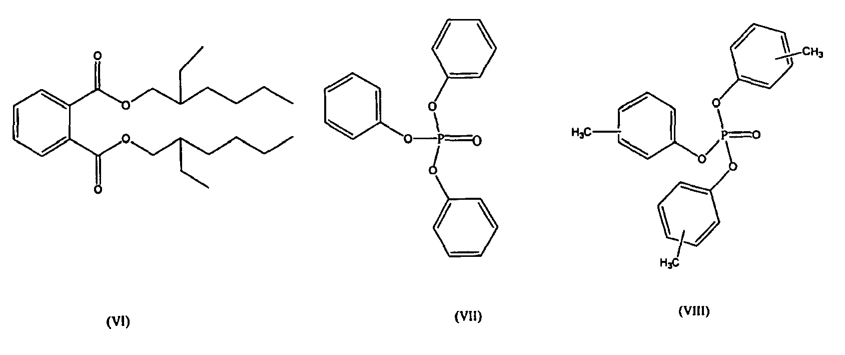

12. Composition selon l'une quelconque des revendications 9 à 11, **caractérisé en ce que** la teneur en plastifiant par rapport à la polyaniline est de 10 à 40 % en poids.

13. Composition selon l'une quelconque des revendications 1 à 12, comprenant en outre un solvant.

14. Composition selon la revendication 13, dans laquelle le solvant répond à la formule (IX) générale suivante : 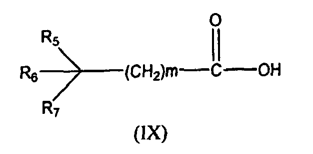
dans laquelle
- R₅, R₆, R₇ représentent chacun le même atome ou au moins deux atomes différents choisis parmi le groupe d'atomes H, F, Cl, Br et CN, et
- m est égal à 0 ou est un nombre entier inférieur à 12, de préférence inférieur à 4.

15. Composition selon l'une quelconque des revendications 13 à 14, dans laquelle le solvant est choisi parmi l'acide 2,2-dichloroacétique, l'acide 2,2-difluoroacétique, l'acide perfluoroacétique, l'acide chorodifluoroacétique, l'acide bromoacétique, l'acide chloroacétique et un mélange de ceux-ci.

16. Composition selon la revendication 15, dans laquelle le solvant est l'acide 2,2-dichloroacétique.

17. Composition selon l'une quelconque des revendications 13 à 16, dans laquelle la teneur en polyaniline est de 0,1 à 10 % en poids.

18. Procédé de fabrication d'un film conducteur de polyaniline **caractérisé en ce qu'**il comprend successivement les étapes suivantes :
- préparer une composition selon l'une quelconque des revendications 1 à 12, et
- former à partir de ladite composition le film par traitement thermique.

19. Procédé de fabrication d'un film conducteur de polyaniline **caractérisé en ce qu'**il comprend successivement les étapes suivantes :
- couler sur un support une composition selon l'une quelconque des revendications 13 à 17, et
- former le film par évaporation du solvant.

20. Polyaniline sous sa forme éméraldine base conductrice dopée par un composé répondant à la formule : 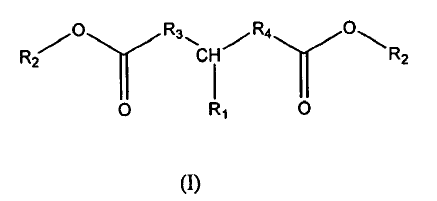
dans laquelle
- R₁ représente -SO₂(OH) ou -PO(OH)₂ ou -OPO(OH)₂.
- les R₂, identiques ou différents, représentent un groupe hydrocarboné, saturé ou insaturé, à chaîne linéaire ou ramifié, comportant dans sa chaîne un ou plusieurs atomes d'oxygène ; et
- R₃ et R₄ représentent indépendamment une liaison directe, un groupe hydrocarboné,saturé ou insaturé à chaîne linéaire ou ramifié, pouvant comporter dans sa chaîne un ou plusieurs groupements aromatiques et/ou un ou plusieurs atomes d'oxygène, ou représentent un groupe hydrocarboné cyclique ou aromatique.

21. Polyaniline selon la revendication 20, dopée par un acide choisi parmi les acides répondant aux formules suivantes:

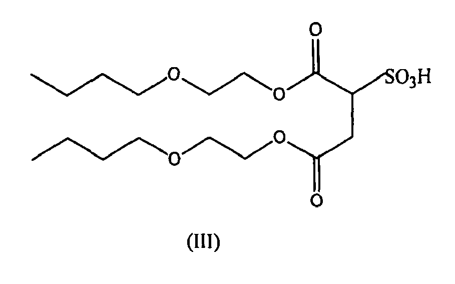

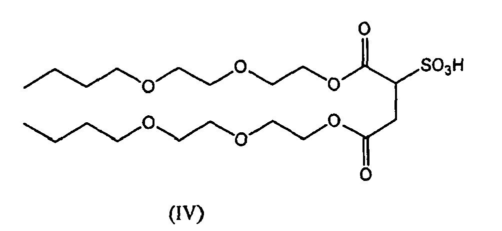

22. Polyaniline selon l'une quelconque des revendications 20 et 21, comprenant, en outre, un plastifiant.

23. Polyaniline selon la revendication 22, dans lequel le plastifiant est le triphénylphosphate.

24. Procédé de fabrication d'un matériau composite conducteur, à base de polyaniline **caractérisé en ce qu'**il comprend successivement les étapes suivantes :
- mélanger une composition selon l'une quelconque des revendications 1 à 12 avec un polymère isolant ;
- former, à partir du mélange obtenu, un matériau composite par traitement thermique.

25. Procédé de fabrication d'un matériau composite conducteur à base de polyaniline **caractérisé en ce qu'**il comprend successivement les étapes suivantes :
- mélanger une première solution, formée d'une composition de polyaniline dans un solvant selon l'une quelconque des revendications 13 à 17 avec une deuxième solution d'un polymère isolant dans un solvant, et
- former, à partir du mélange obtenu, un matériau composite, par évaporation des solvants.

26. Procédé de fabrication d'un matériau composite conducteur selon la revendication 25, **caractérisé en ce que** le solvant de la première solution et le solvant de la deuxième solution sont identiques.

27. Procédé de fabrication d'un matériau composite conducteur selon l'une quelconque des revendications 24 à 26, **caractérisé en ce que** le polymère isolant est choisi parmi les polymères vinyliques tels que le polychlorure de vinyle, les polymères cellulosiques tels que l'acétate de cellulose, les polymères acryliques tels que le polyméthacrylate de méthyle, les polymères du type polyesters tels que le polyéthylène téréphtalate, les polymères du type polyamides tels que le polyamide-6,6 et les mélanges de ceux-ci.

28. Matériau composite conducteur comprenant une matrice de polymère isolant au sein de laquelle est dispersée une polyaniline sous sa forme éméraldine base conductrice dopée par un dopant de formule générale : 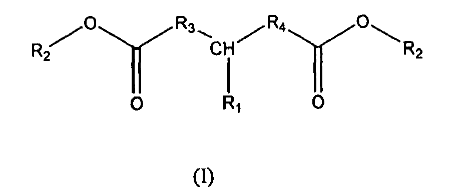
dans laquelle :
- R₁ représente -SO₂(OH) ou -PO(OH)₂ ou -OPO(OH)₂,
- les R₂, identiques ou différents, représentent un groupe hydrocarboné, saturé ou insaturé, à chaîne linéaire ou ramifié, comportant dans sa chaîne un ou plusieurs atomes d'oxygène ; et
- R₃ et R₄ représentent indépendamment une liaison directe, un groupe hydrocarboné, saturé ou insaturé, à chaîne linéaire ou ramifié, pouvant comporter dans sa chaîne un ou plusieurs groupements aromatiques et/ou un ou plusieurs atomes d'oxygène, ou représentent un groupe hydrocarboné cyclique ou aromatique.

29. Matériau composite conducteur selon la revendication 28, dont la polyaniline est dopée par un acide choisi parmi les acides répondant aux formules suivantes:

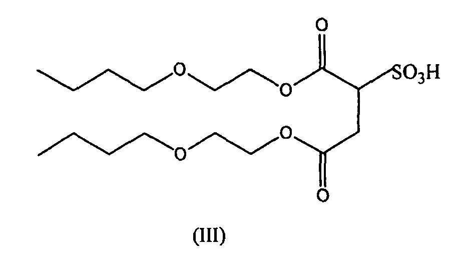

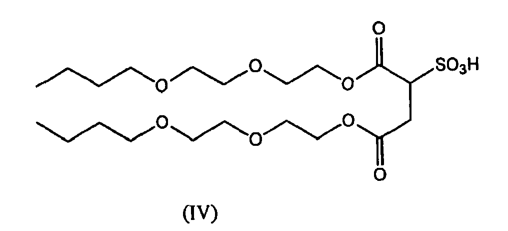

30. Matériau composite conducteur selon l'une quelconque des revendications 28 et 29, comprenant en outre, un plastifiant.

31. Matériau composite conducteur selon l'une quelconque des revendications 28 à 30, **caractérisé en ce que** le polymère isolant est le polyméthacrylate de méthyle.

32. Matériau composite conducteur selon l'une quelconque des revendications 28 à 31, **caractérisé en ce que** la teneur en polyaniline du matériau composite conducteur est de 0,01 à 40% en poids.

## Patentansprüche

1. Zusammensetzung zur Herstellung von elektrisch leitenden Filmen aus Polyanilin oder aus einem elektrisch leitenden Material auf Basis von Polyanilin, die umfasst:
- ein Polyanilin, das in Form seiner Emeraldin-Base vorliegt, und
- ein Dotierungsmittel der allgemeinen Formel: 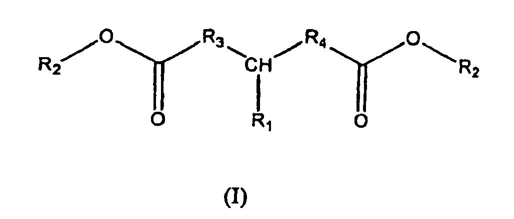
worin:
- R₁ steht für -SO₂(OH) oder -PO(OH)₂ oder -OPO(OH)₂;
- die Reste R₂, die gleich oder verschieden sind, stehen jeweils für eine gesättigte oder ungesättigte Kohlenwasserstoffgruppe mit einer linearen oder verzweigten Kette, die in ihrer Kette ein oder mehrere Sauerstoffatome enthält; und
- R₃ und R₄ unabhängig voneinander stehen für eine direkte Bindung, eine gesättigte oder ungesättigte Kohlenwasserstoffgruppe mit linearer oder verzweigter Kette, die in ihrer Kette eine oder mehrere aromatische Gruppen und/oder ein oder mehrere Sauerstoffatome aufweisen kann, oder stehen für eine zyklische oder aromatische Kohlenwasserstoffgruppe.

2. Zusammensetzung nach Anspruch 1, in der das Dotierungsmittel der Formel (I) entspricht, in welcher die Reste R₂ stehen für lineare oder verzweigte Alkylgruppen mit 5 bis 12 Kohlenstoffatomen.

3. Zusammensetzung nach Anspruch 1, in der das Dotierungsmittel der Formel (I) entspricht, in der die Reste R₂ lineare oder verzweigte Alkylgruppen darstellen, die in ihrer Kette 1 bis 3 Sauerstoffatome enthalten.

4. Zusammensetzung nach Anspruch 2 oder 3, in der das Dotierungsmittel der Formel (I) entspricht, in der R₃ eine direkte Bindung darstellt und R₄ für eine Methylengruppe steht.

5. Zusammensetzung nach Anspruch 1, in der das Dotierungsmittel der Formel entspricht:

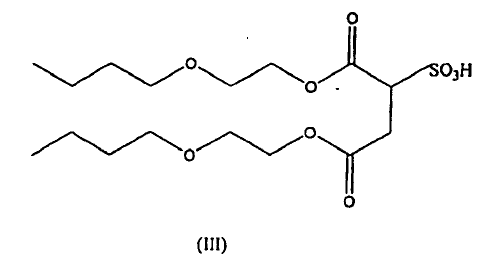

6. Zusammensetzung nach Anspruch 1, in der das Dotierungsmittel der Formel entspricht:

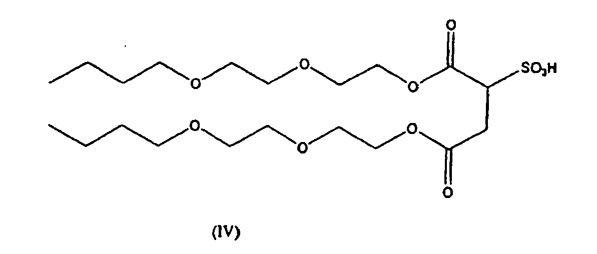

7. Zusammensetzung nach einem der vorhergehenden Ansprüche, in der das Polyanilin mehr als 10 wiederkehrende Einheiten mit der nachstehend angegebenen Formel (V) umfasst:

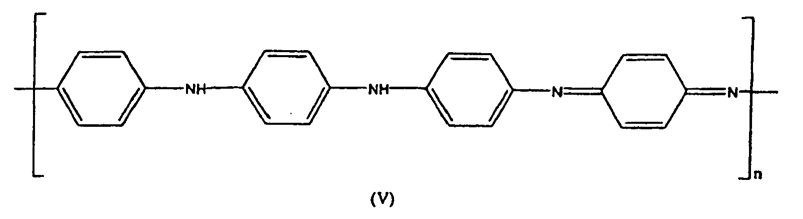

8. Zusammensetzung nach einem der Ansprüche 1 bis 7, in der das Molverhältnis zwischen dem Dotierungsmittel und dem Polyanilin in dem Bereich von 0,4 bis 0,6 liegt.

9. Zusammensetzung nach einem der Ansprüche 1 bis 8, die außerdem einen Weichmacher (ein Plastifizierungsmittel) umfasst.

10. Zusammensetzung nach Anspruch 9, in der der Weichmacher (das Plastifizierungsmittel) ausgewählt ist aus der Gruppe der Phthalsäurediester und der Phosphorsäureester.

11. Zusammensetzung nach Anspruch 10, in welcher der Weichmacher (das Plastifizierungsmittel) ausgewählt ist aus der Gruppe der Verbindungen mit den folgenden Formeln:

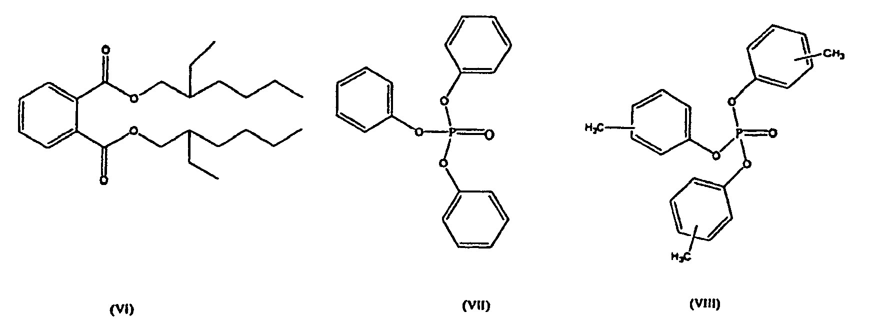

12. Zusammensetzung nach einem der Ansprüche 9 bis 11, **dadurch gekennzeichnet, dass** der Gehalt an Weichmacher (Plastifizierungsmittel), bezogen auf das Polyanilin, 10 bis 40 Gew.-% beträgt.

13. Zusammensetzung nach einem der Ansprüche 1 bis 12, die außerdem ein Lösungsmittel umfasst.

14. Zusammensetzung nach Anspruch 13, in welcher das Lösungsmittel der folgenden allgemeinen Formel (IX) entspricht: 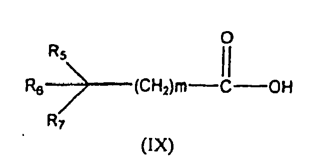
worin:
- R₅, R₆, R₇ jeweils stehen für das gleiche Atom oder für mindestens zwei unterschiedliche Atome, ausgewählt aus H, F, Cl, Br und CN, und
- m steht für die Zahl 0 oder für eine ganze Zahl von kleiner als 12, vorzugsweise von kleiner als 4.

15. Zusammensetzung nach einem der Ansprüche 13 bis 14, in der das Lösungsmittel ausgewählt ist aus der Gruppe 2,2-Dichloressigsäure, 2,2-Difluoressigsäure, Perfluoressigsäure, Chlordifluoressigsäure, Bromessigsäure, Chloressigsäure und einer Mischung davon.

16. Zusammensetzung nach Anspruch 15, in der das Lösungsmittel 2,2-Dichloressigsäure ist.

17. Zusammensetzung nach einem der Ansprüche 13 bis 16, in welcher der Gehalt an Polyanilin 0,1 bis 10 Gew.-% beträgt.

18. Verfahren zur Herstellung eines elektrisch leitenden Polyanilin-Films, **dadurch gekennzeichnet, dass** es die folgenden Stufen umfasst:
- Herstellung einer Zusammensetzung nach einem der Ansprüche 1 bis 12 und
- Formen des Films aus der genannten Zusammensetzung durch thermische Behandlung.

19. Verfahren zur Herstellung eines elektrisch leitenden Polyanilin-Films, **dadurch gekennzeichnet, dass** es die folgenden aufeinanderfolgenden Stufen umfasst:
- Gießen einer Zusammensetzung nach einem der Ansprüche 13 bis 17 auf einen Träger und
- Formen des Films durch Verdampfen des Lösungsmittels.

20. Elektrisch leitendes Polyanilin in Form seiner Emeraldin-Base, das mit einer Verbindung der folgenden Formel dotiert ist: 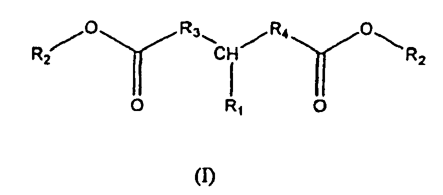
worin:
- R₁ steht für -SO₂(OH) oder -PO(OH)₂ oder -OPO(OH)₂;
- die Reste R₂, die gleich oder verschieden sind, jeweils stehen für eine gesättigte oder ungesättigte Kohlenwasserstoffgruppe mit einer linearen oder verzweigten Kette, die in ihrer Kette ein oder mehrere Sauerstoffatome enthält; und
- R₃ und R₄ unabhängig voneinander stehen für eine direkte Bindung, eine gesättigte oder ungesättigte Kohlenwasserstoffgruppe mit linearer oder verzweigter Kette, die in ihrer Kette eine oder mehrere aromatische Gruppen und/oder ein oder mehrere Sauerstoffatome aufweisen kann, oder stehen für eine zyklische oder aromatische Kohlenwasserstoffgruppe.

21. Polyanilin nach Anspruch 20, das mit einer Säure, ausgewählt unter den Säuren der folgenden Formeln, dotiert ist:

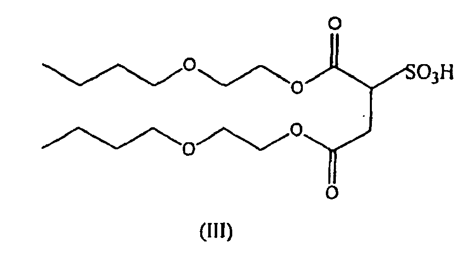

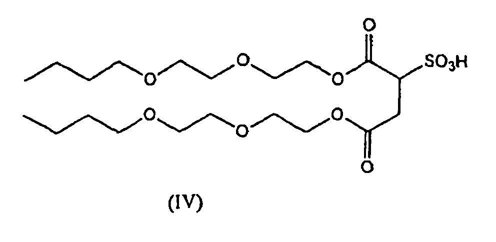

22. Polyanilin nach einem der Ansprüche 20 und 21, das außerdem einen Weichmacher (ein Plastifizierungsmittel) umfasst.

23. Polyanilin nach Anspruch 22, in dem der Weichmacher (das Plastifizierungsmittel) Triphenylphosphat ist.

24. Verfahren zur Herstellung eines elektrisch leitenden Verbundmaterials auf Basis von Polyanilin, **dadurch gekennzeichnet, dass** es die folgenden aufeinanderfolgenden Stufen umfasst:
- Mischen einer Zusammensetzung nach einem der Ansprüche 1 bis 12 mit einem isolierenden Polymer;
- Formen eines Verbundmaterials aus der erhaltenen Mischung durch thermische Behandlung.

25. Verfahren zur Herstellung eines elektrisch leitenden Verbundmaterials auf Basis von Polyanilin, **dadurch gekennzeichnet, dass** es die folgenden aufeinanderfolgenden Stufen umfasst:
- Mischen einer ersten Lösung, die aus einer Polyanilin-Zusammensetzung in einem Lösungsmittel nach einem der Ansprüche 13 bis 17 hergestellt worden ist, mit einer zweiten Lösung eines isolierenden Polymers in einem Lösungsmittel und
- Formen eines Verbundmaterials aus der dabei erhaltenen Mischung durch Verdampfen der Lösungsmittel.

26. Verfahren zur Herstellung eines elektrisch leitenden Verbundmaterials nach Anspruch 25, **dadurch gekennzeichnet, dass** das Lösungsmittel der ersten Lösung und das Lösungsmittel der zweiten Lösung identisch sind.

27. Verfahren zur Herstellung eines elektrisch leitenden Verbundmaterials nach einem der Ansprüche 24 bis 26, **dadurch gekennzeichnet, dass** das isolierende Polymer ausgewählt wird unter den Vinylpolymeren wie Polyvinylchlorid, den Cellulosepolymeren wie Celluloseacetat, den Acrylpolymeren wie Polymethylmethacrylat, den Polymeren vom Polyester-Typ wie Polyethylentherephtalat, den Polymeren vom Polyamid-Typ wie 6,6-Polyamid und den Mischungen davon.

28. Elektrisch leitendes Verbundmaterial, das eine isolierende Polymermatrix umfasst, in der ein elektrisch leitendes Polyanilin in Form seiner Emeraldin-Base dispergiert ist, und die dotiert ist mit einem Dotierungsmittel der allgemeinen Formel: 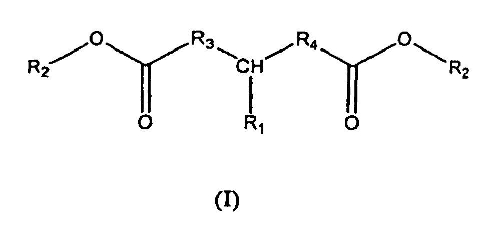
worin:
- R₁ steht für -SO₂(OH) oder -PO(OH)₂ oder -OPO(OH)₂;
- die Reste R₂, die gleich oder verschieden sind, jeweils stehen für eine gesättigte oder ungesättigte Kohlenwasserstoffgruppe mit einer linearen oder verzweigten Kette, die in ihrer Kette ein oder mehrere Sauerstoffatome enthält; und
- R₃ und R₄ unabhängig voneinander stehen für eine direkte Bindung, eine gesättigte oder ungesättigte Kohlenwasserstoffgruppe mit linearer oder verzweigter Kette, die in ihrer Kette eine oder mehrere aromatische Gruppen und/oder ein oder mehrere Sauerstoffatome aufweisen kann, oder stehen für eine zyklische oder aromatische Kohlenwasserstoffgruppe.

29. Elektrisch leitendes Verbundmaterial nach Anspruch 28, in dem das Polyanilin mit einer Säure, ausgewählt aus den Säuren der folgenden Formeln, dotiert ist:

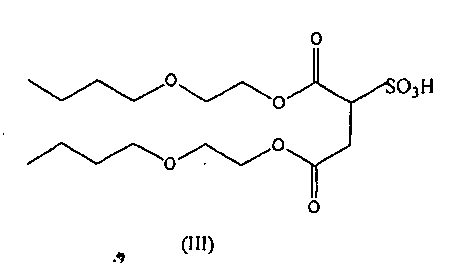

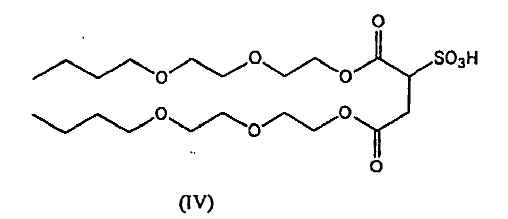

30. Elektrisch leitendes Verbundmaterial nach einem der Ansprüche 28 und 29, das außerdem einen Weichmacher (ein Plastifizierungsmittel) umfasst.

31. Elektrisch leitendes Verbundmaterial nach einem der Ansprüche 28 bis 30, **dadurch gekennzeichnet, dass** das isolierende Polymer Polymethylmethacrylat ist.

32. Elektrisch leitendes Verbundmaterial nach einem der Ansprüche 28 bis 31, **dadurch gekennzeichnet, dass** der Polyanilin-Gehalt des elektrisch leitenden Verbundmaterials 0,01 bis 40 Gew.-% beträgt.

## Claims

1. Composition for the manufacture of conductive polyaniline films or of conductive polyaniline-based composite material comprising:
- a polyaniline present in its emeraldine base form, and
- a dopant corresponding to the general formula: 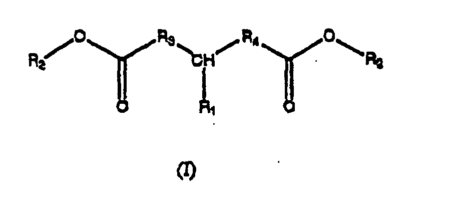
in which:
- R₁ represents -SO₂(OH) or -PO(OH)₂ or -OPO(OH)₂,
- the R₂ groups, which are identical or different, represent a saturated or unsaturated hydrocarbonaceous group with a linear or branched chain, comprising in its chain, one or more oxygen atoms, and
- R₃ and R₄ independently represent a direct bond or a saturated or unsaturated hydrocarbonaceous group with a linear or branched chain, which can comprise, in its chain, one or more aromatic groups and/or one or more oxygen atoms, or represent a cyclic or aromatic hydrocarbonaceous group.

2. Composition according to claim 1, in which the dopant corresponds to formula (I) in which R₂ represents linear or branched alkyl groups comprising from 5 to 12 carbon atoms.

3. Composition according to claim 1, in which the dopant corresponds to formula (I) in which R₂ represents linear or branched alkyl groups comprising in their chain 1 to 3 oxygen atoms.

4. Composition according to either one of claims 2 or 3, in which the dopant corresponds to formula (I) in which R₃ is a direct bond and R₄ is a methylene group.

5. Composition according to claim 1, in which the dopant corresponds to the formula:

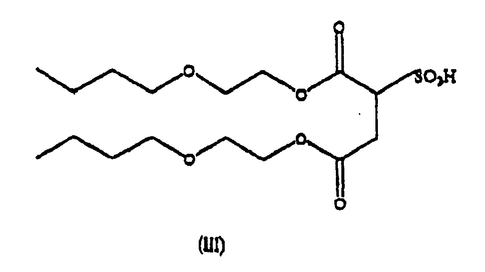

6. Composition according to claim 1, in which the dopant corresponds to the formula:

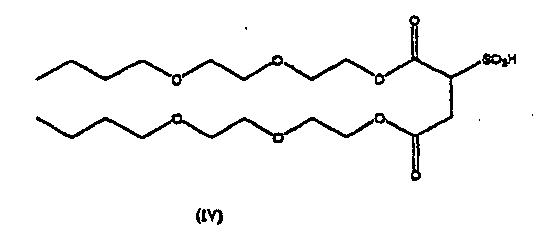

7. Composition according to any one of the preceding claims, in which the polyaniline comprises a number of repeat units of greater than 10, the repeat unit corresponding to the following formula (V):

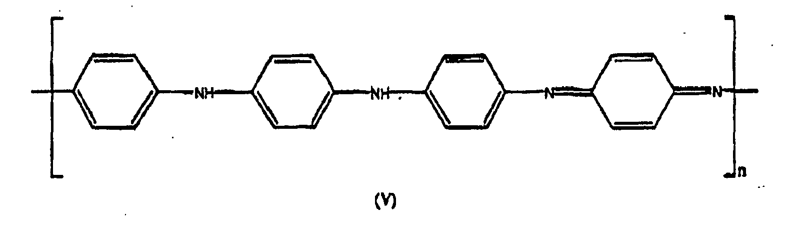

8. Composition according to any one of claims 1 to 7, in which the molar ratio of the dopant to the polyaniline is within the range 0.4 to 0.6.

9. Composition according to any one of claims 1 to 8, additionally comprising a plasticizer.

10. Composition according to claim 9, in which the plasticizer is chosen from diesters of phthalic acid and esters of phosphoric acid.

11. Composition according to claim 10, in which the plasticizer is chosen from the compounds of following formulae:

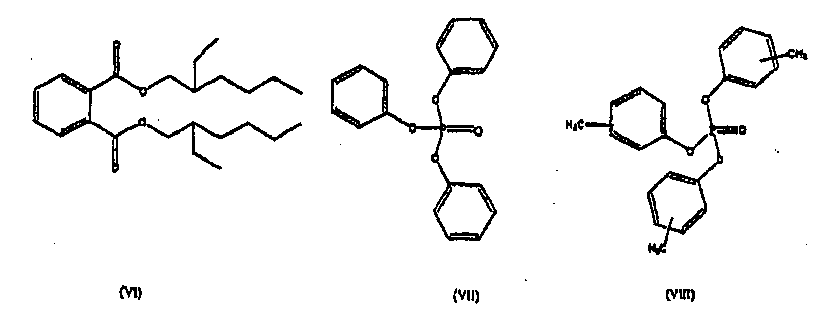

12. Composition according to any one of claims 9 to 11, **characterized in that** the plasticizer content with respect to the polyaniline is from 10 to 40% by weight.

13. Composition according to any one of claims 1 to 12, additionally comprising a solvent.

14. Composition according to claim 13, in which the solvent corresponds to the following general formula (IX): 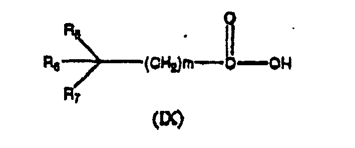
in which
- R₅, R₆ and R₇ each represent the same atom or at least two different atoms chosen from the group of atoms consisting of H, F, Cl, Br and CN, and
- m is equal to 0 or is an integer of less than 12, preferably of less than 4.

15. Composition according to either one of claims 13 and 14, in which the solvent is chosen from 2,2-dichloroacetic acid, 2,2-difluoroacetic acid, perfluoroacetic acid, chlorodifluoroacetic acid, bromoacetic acid, chloroacetic acid and a mixture of these.

16. Composition according to claim 15, in which the solvent is 2,2-dichloroacetic acid.

17. Composition according to any one of claims 13 to 16, in which the polyaniline content is from 0.1 to 10% by weight.

18. Process for the manufacture of a conductive polyaniline film, **characterized in that** it comprises successively the following stages:
- preparing a composition according to any one of claims 1 to 12, and
- forming, from the said composition, the film by heat treatment.

19. Process for the manufacture of a conductive polyaniline film, **characterized in that** it comprises successively the following stages:
- pouring, over a support, a composition according to any one of claims 13 to 17, and
- forming the film by evaporation of the solvent.

20. Conductive polyaniline in its basic emeraldine form doped by a compound corresponding to the formula: 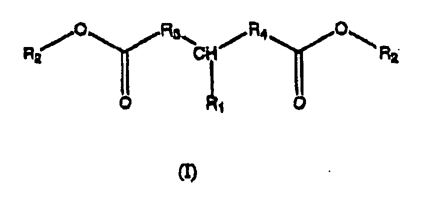
in which:
- R₁ represents -SO₂(OH) or -PO(OH)₂ or -OPO(OH)₂,
- the R₂ groups, which are identical or different, represent a saturated or unsaturated hydrocarbonaceous group with a linear or branched chain, comprising in its chain, one or more oxygen atoms, and
- R₃ and R₄ independently represent a direct bond or a saturated or unsaturated hydrocarbonaceous group with a linear or branched chain, which can comprise, in its chain, one or more aromatic groups and/or one or more oxygen atoms, or represent a cyclic or aromatic hydrocarbonaceous group.

21. Polyaniline according to claim 20, doped by an acid chosen from the acids corresponding to the following formulae:

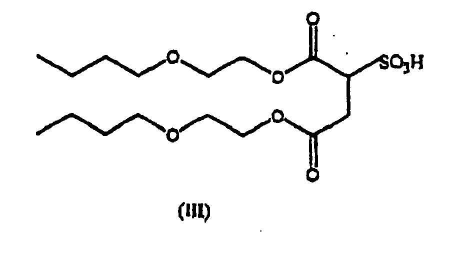

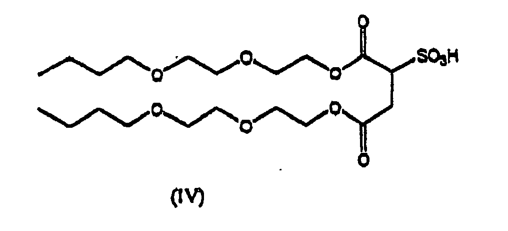

22. Polyaniline according to either one of claims 20 and 21, additionally comprising a plasticizer.

23. Polyaniline according to claim 22, in which the plasticizer is triphenyl phosphate.

24. Process for the manufacture of a conductive polyaniline-based composite material, **characterized in that** it comprises successively the following stages:
- mixing a composition according to any one of claims 1 to 12 with an insulating polymer;
- forming, from the mixture obtained, a composite material by heat treatment.

25. Process for the manufacture of a conductive polyaniline-based composite material, **characterized in that** it comprises successively the following stages:
- mixing a first solution, formed from a polyaniline composition in a solvent according to any one of claims 13 to 17, with a second solution of an insulating polymer in a solvent, and
- forming, from the mixture obtained, a composite material by evaporation of the solvents.

26. Process for the manufacture of a conductive composite material according to claim 25, **characterized in that** the solvent of the first solution and the solvent of the second solution are identical.

27. Process for the manufacture of a conductive composite material according to any one of claims 24 to 26, **characterized in that** the insulating polymer is chosen from vinyl polymers, such as poly(vinyl chloride), cellulose polymers, such as cellulose acetate, acrylic polymers, such as poly(methyl methacrylate), polymers of the polyesters type, such as poly(ethylene terephthalate), polymers of the polyamides type, such as polyamide-6,6, and blends of these.

28. Conductive composite material comprising an insulating polymer matrix within which is dispersed a conductive polyaniline in its basic emeraldine form doped by a dopant of the general formula: 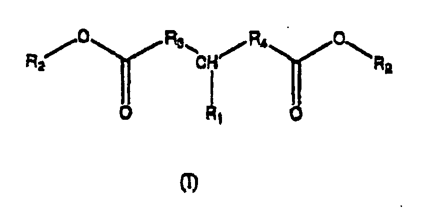
in which:
- R₁ represents -SO₂(OH) or -PO(OH)₂ or -OPO(OH)₂,
- the R₂ groups, which are identical or different, represent a saturated or unsaturated hydrocarbonaceous group with a linear or branched chain, comprising in its chain, one or more oxygen atoms, and
- R₃ and R₄ independently represent a direct bond or a saturated or unsaturated hydrocarbonaceous group with a linear or branched chain, which can comprise, in its chain, one or more aromatic groups and/or one or more oxygen atoms, or represent a cyclic or aromatic hydrocarbonaceous group.

29. Conductive composite material according to claim 28, the polyaniline of which is doped by an acid chosen from the acids corresponding to the following formulae:

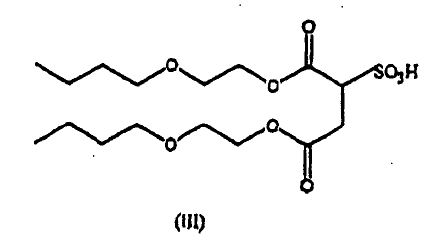

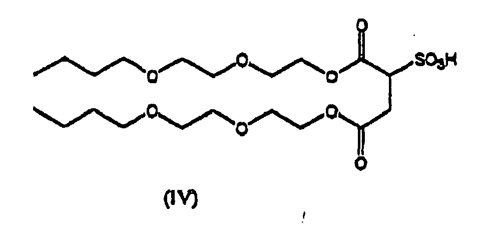

30. Conductive composite material according to either one of claims 28 and 29, additionally comprising a plasticizer.

31. Conductive composite material according to any one of claims 28 to 30, **characterized in that** the insulating polymer is poly(methyl methacrylate).

32. Conductive composite material according to any one of claims 28 to 31, **characterized in that** the polyaniline content of the conductive composite material is from 0.01 to 40% by weight.
